# EUROPEAN PATENT APPLICATION

(11) **EP 3 079 113 A1**
(43) Date of publication of application: **12.10.2016**
(21) Application number: 16160929.2
(22) Date of filing: 17.03.2016
(51) Int. Cl.: G06Q 10/08

(54) **SYSTEM FOR MANAGING MAINTENANCE SPECIFIC TOOLS**

(30) Priority: 08.04.2015 CN 201510163019
(71) Applicant: Bosch Automotive Service Solutions (Suzhou) Co., Ltd., Suzhou New District VRC-215129 (CN)
(72) Inventor: Lv, David, 200335 Shanghai (CN); Li, Andy, 200335 Shanghai (CN); Chen, Zhengchong, 200335 Shanghai (CN)
(74) Representative: Bee, Joachim

(57) **Abstract**

The present application discloses a dedicated repair tool managing system, which comprises a problem collecting device, a dedicated tool selecting device, and a data switching device. The problem collecting device collects the description of the repair problem that needs to be addressed. The dedicated tool selecting device screening information of the suggested dedicated tools for fixing the repair problem(s) that needs to be addressed from the dedicated tool database based on the description of the repair problem(s) such that a user chooses the dedicated tool desired to be acquired from said suggested dedicated tools and a list of the dedicated tools desired to be acquired is formed. The list of the dedicated tools is submitted to the tool cabinet via the data switching device. The tool cabinet automatically provides the dedicated tools desired to be acquired to the user. The dedicated repair tools are thus well-suited management.

## Description

### FIELD OF INVENTION

The present application relates to repair tools, more particularly, to the storage and selection of the repair tools.

### BACKGROUND

The modem vehicle is a highly complex system. Many vehicle problems need to be fixed with dedicated tools, and the repair tools that each vehicle brand used for the similar problem are usually different. Therefore, in a service station that is capable of repairing various brands and types of cars, there are a large number of tools generally. At present, some service stations has employed automatic tool cabinets to manage the dedicated tools, where the mechanics can acquire a dedicated tool only by inputting a corresponding tool number. However, it still requires a large amount of effort to find the tool number of the suitable dedicated tool in the enormous various combinations of tools.

Thus, it is necessary to provide improvement to overcome the defects in the prior art.

### SUMMARY OF INVENTION

The primary object of the present application is to conveniently manage the dedicated repair tools.

In viewing of the object, the present application provides a dedicated repair tool managing system on one aspect, which comprises:
a problem collecting device (1) for collecting description of the repair problem(s) that needs to be addressed;
a dedicated tool selecting device for screening information of suggested dedicated tools for fixing said repair problem(s) that needs to be addressed from a dedicated tool database based upon the description of said repair problem(s) such that a user chooses the dedicated tool desired to be acquired from said suggested dedicated tools and a list of the dedicated tools desired to be acquired is formed; and
a data switching device through which said list of dedicated tools is submitted to the tool cabinet so that said tool cabinet provide the dedicated tools listed in said list to the user.

Feasibly, said dedicated tool selecting device generates operating instructions for suggested repair steps for fixing said repair problem(s) based upon the description of said repair problem(s), said operating instructions being associated to the information of the dedicated tools required by respective repair steps at which the instructions of said operating instructions is executed, the information of said suggested dedicated tools comprising the information of the dedicated tools to which said operating instructions is associated.

Feasibly, the list of the information of said dedicated tools comprises the identification number of the dedicated tool that is desired to be acquired.

Feasibly, said dedicated tool database may be embedded in said dedicated repair tool managing system, or be a remote database, or be the combination thereof.

Feasibly, said dedicated repair tool managing system further comprises a diagnosing instrument that is communicated with said problem collecting device, where said diagnosing instrument may automatically diagnosis the malfunction information of the object that needs to be repaired, generates the description of said repair problem that needs to be addressed based on said malfunction information, and submits the generated description to said problem collecting device.

Feasibly, said data switching device may submit the list of said dedicated tools to said tool cabinet in the form of electronic data.

Feasibly, said problem collecting device provides a human machine interface through which the user can input the description of the repair problem that needs to be addressed by way of options.

Feasibly, said options are selected from the brands, types, parts, and malfunction types of the object that needs to be repaired.

Feasibly, said dedicated repair tool managing system comprises said tool cabinet, with which said data switching device is communicatively connected.

Feasibly, all of the problem collecting device, the dedicated tool selecting device, and the data switching device are integrated in said tool cabinet.

Since the dedicated repair tool managing system according to the present application may collect the description of the repair problem that needs to be addressed, further screen based upon the description so as to form a list of the dedicated tools that is desired to be acquired, and submit the list of the dedicated tools to the tool cabinet through data switching device such that the tool cabinet may provide the dedicated tools listed on the list to the user, the selection of the dedicated tools is quite easy where the mechanics are capable of finding the desired dedicated tools conveniently as long as they have the knowledge of repairing without even knowing the storage of the dedicated tools.

In addition, the dedicated tool selecting device generates the operating instructions of the suggested repair steps for addressing the repair problem(s) based on the description of the repair problem(s), so the mechanics may grasp the usage of the tools and the solution of the repair problem(s) very easily.

### BRIEF DESCRIPTION OF DRAWINGS

The present application will be understood more fully with reference to the detailed explanation of the following description of the embodiments in conjunction with the appended drawings, wherein:
Fig 1 shows a schematic diagram of a dedicated repair tool managing system connecting to a tool cabinet according to one embodiment of the present application;
Fig 2 shows a schematic diagram of a dedicated repair tool managing system connecting to a remote dedicated tool database and the tool cabinet according to the second embodiment of the present application;
Fig 3 shows a schematic diagram of a dedicated repair tool managing system according to the third embodiment of the present application; and
Fig 4 shows a schematic diagram of a dedicated repair tool managing system connecting to the tool cabinet according to the forth embodiment of the present application.

### DESCRIPTION OF EMBODIMENTS

The description of embodiments of the present application is elaborated in detail below in conjunction with the appending drawings.

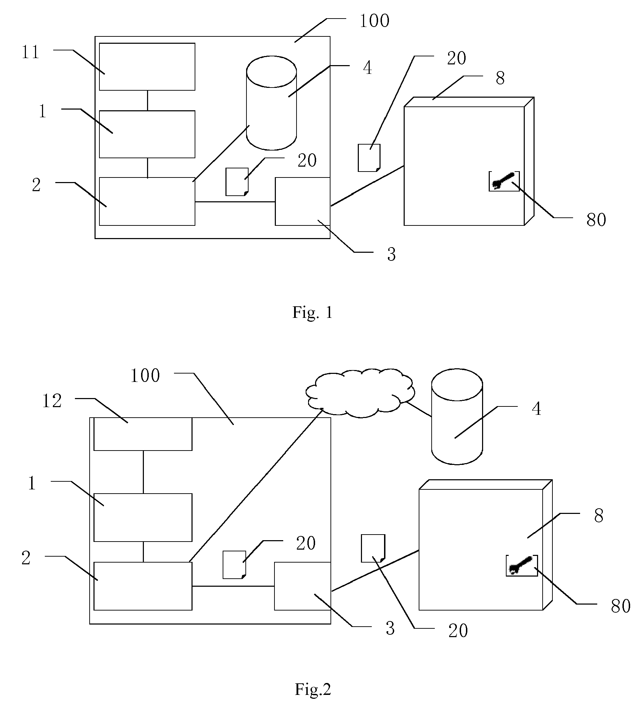

Fig 1 shows the schematic diagram of a dedicated repair tool managing system 100 connecting to a tool cabinet 8 according to one embodiment of the present application. The dedicated repair tool managing system 100 comprises a problem collecting device 1, a dedicated tool selecting device 2, and a data switching device 3. The problem collecting device 1 collects description of a repair problem(s) that needs to be addressed. The dedicated tool selecting device 2 can screen information of a suggested dedicated tool(s) for fixing the repair problem that needs to be addressed from the dedicated tool database 4 based on the description of the repair problem(s) such that the user can choose the dedicated tool that is desired to be acquired from the suggested dedicated tools and a list 20 of the dedicated tools desired to be acquired can be formed. The list 20 of the dedicated tools can be submitted to the tool cabinet 8 via the data switching device 3. The tool cabinet 8 automatically takes out the dedicated tools listed on the list 20, and sends these dedicated tools to a tool accessing hatch 80 via a transporting device such as a manipulator, a conveyor belt and the like. Then, the user can obtain the dedicated tool that is desired to be acquired from the tool accessing hatch 80.

The dedicated repair tool managing system according to the present application can collect the description of the repair problem(s) that needs to be addressed, form a list of the dedicated tools desired to be acquired screened based upon the description, and submit the list of the dedicated tools to the tool cabinet via the data switching device such that the tool cabinet provide the dedicated tools listed on the list to the user. As such, the selecting of the dedicated tools is quite easy, where the mechanics are capable of finding the desired dedicated tools conveniently as long as they have the knowledge of repairing even without knowing the details of how the dedicated tools are stored.

Feasibly, the information of the suggested dedicated tools can be provided in manner of being associated with the operating instructions. For example, in a feasible embodiment, the dedicated tool selecting device 2 generates suggested repair steps for fixing the repair problem based on the description of the repair problem(s), and the system provides operating instruction for each of the repair steps. The operating instructions may be provided in any form of text, figure, or operating video, or the combination thereof. Each of the operating instructions is associated (for example, associated by hyperlink) to the information of the dedicated tools required at the repair step executing the instructions of said each of the operating instructions. Because the dedicated tool selecting device generates the operating instructions of the suggested repair steps for fixing the repair problem based upon the description of the repair problem, the mechanics are able to get hold of the solution to the repair problem and grasp the usage of the tools in accordance with the operating instructions in a considerably easy way.

Feasibly, the system provides a tool container, into which the dedicated tool that is desired to be acquired can be added by the user, and after making selections, a list 20 of the information of the dedicated tools desired to be acquired can be formed based on the dedicated tools in the tool container that has already been chosen. The data switching device 3 can submit the list 20 of the dedicated tools that are desired to be acquired to the tool cabinet 8 in the form of electronic data considerably fast. Additionally, the list can be provided to the tool cabinet 8 in the form of physical list as well. For example, a Quick Response code (QR code) can be created from the list 20 of the dedicated tools that are desired to be acquired and a QR code reading device (not shown in the figure) is provided in the tool cabinet such that the list of the dedicated tools that are desired to be acquired can be input into the tool cabinet 8 by reading the QR code with the QR code reading device. Each dedicated tool has a unique identification number (such as tool number), the list 20 of the information of the dedicated tools comprises the identification number of each of the dedicated tools desired to be acquired. Thus, the tool cabinet 8 can accurately identify the tool that the user desire to acquire.

It should be recognized by those with ordinary skill in the art that the dedicated tool database 4 may be embedded in the dedicated repair tool managing system 100, and can therefore operate without network. Certainly, as shown in Fig 2, the dedicated tool database 4 may also be a remote database, as such a plurality of dedicated repair tool managing system 100 can share the service of the remote database, where the management of updating the remote database will be handled centrally by a remote server end, rather than by the local crew of the dedicated repair tool managing system 100. Moreover, the dedicated tool database 4 may also be deployed in combination of embedded and remote database service. In the case that the remote database cannot be accessed due to having no network, the dedicated repair tool managing system 100 can work with an embedded database; in the case that the remote database can be accessed over the network, the dedicated repair tool managing system 100 can work with the remote database, and update the embedded local database with the updated remote database as well. Accordingly, the dedicated repair tool managing system 100 can work by synthesizing the advantage of both cases.

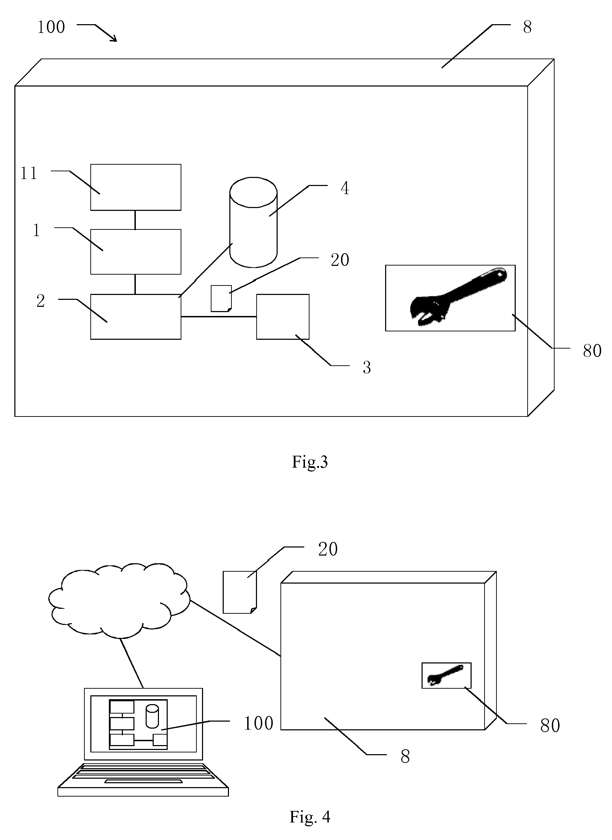

As shown in Fig. 3, in the dedicated repair tool managing system according to the third embodiment of the present application, the dedicated repair tool managing system 100 comprises a tool cabinet 8, to which the data switching device 3 is communicatively connected, for example, the data switching device 3 is communicatively connected with the controller of the tool cabinet 8. All of the problem collecting device 1, the dedicated tool selecting device 2, and the data switching device 3 can be integrated in the tool cabinet 8.

Feasibly, the dedicated repair tool managing system 100 further comprises a diagnosing instrument 11 communicated with the problem collecting device 1. The diagnosing instrument 11 can be connected to the vehicle's OBD (On-Board Diagnostic) interface via which the malfunction information of the repair object (vehicle) may be diagnosed. In the dedicated repair tool managing system 100 according to the present application, a description of the repair problem(s) that needs to be addressed can be generated based on the malfunction information, and can be submitted to the problem collecting device 1. Thus, a repair solution can be obtained quickly and the dedicated tools required can be acquired rapidly.

In an alternative embodiment shown in Fig.2, the problem collecting device 1 provides a human machine interface 12, via which the user can input the description of the repair problem that needs to be addressed in the forms options. For example, by being provided with an option of the brand of the object to be repaired, the user may choose to describe the repair problem(s) against the particular vehicle brand. Additionally, the options of types, parts and/or malfunction types may be provided to the user in describing the repair problem(s), the more specific the inputted options are, the more accurate the advice given by system is, and the easier the user may find the relevant dedicated tools.

The embodiments above are only for illustrating the present application, rather than a limitation of the present application. Those with ordinary skill in the art may further make various modifications and changes without departing from the scope of the present application. For example, as shown in Fig 4, the dedicated repair tool managing system 100 may be installed in a general purpose computer, which is connected to the tool cabinet 8 over network. Hence, all the equivalent technical solutions fall within the scope of the present application as well, and the scope of the patent protection of the present application should be defined by the appended claims.

## Claims

1. A dedicated repair tool managing system, which comprises:
a problem collecting device (1) for collecting description of the repair problem(s) that needs to be addressed;
a dedicated tool selecting device (2) for screening information of suggested dedicated tools for fixing said repair problem(s) that needs to be addressed from a dedicated tool database (4) based upon the description of said repair problem(s) such that a user chooses the dedicated tool desired to be acquired from said suggested dedicated tools and a list (20) of the dedicated tools desired to be acquired is formed; and
a data switching device (3) through which said list (20) of dedicated tools is submitted to the tool cabinet (8) so that said tool cabinet (8) provide the dedicated tools listed in said list (20) to the user.

2. The dedicated repair tool managing system (100) according to claim 1, wherein, said dedicated tool selecting device (2) generates operating instructions for suggested repair steps for fixing said repair problem(s) based upon the description of said repair problem(s), said operating instructions being associated to the information of the dedicated tools required by respective repair steps at which the instructions of said operating instructions is executed, the information of said suggested dedicated tools comprising the information of the dedicated tools to which said operating instructions is associated.

3. The dedicated repair tool managing system (100) according to claim 1, wherein, said list (20) of the information of the dedicated tools comprises an identification number of the dedicated tool that is desired to be acquired.

4. The dedicated repair tool managing system (100) according to claim 1, wherein, said dedicated tool database (4) is embedded in said dedicated repair tool managing system (100), or is a remote database, or is the combination thereof.

5. The dedicated repair tool managing system (100) according to claim 1, further comprises a diagnosing instrument (11) communicated with said problem collecting device (1), said diagnosing instrument (11) automatically diagnosing the malfunction information of the object that needs to be repaired, generating the description of said repair problem that needs to be addressed based on said malfunction information, and submitting the generated description to said problem collecting device (1).

6. The dedicated repair tool managing system (100) according to claim 1, wherein, said data switching device (3) submits the list (20) of said dedicated tools to said tool cabinet (8) in the form of electronic data.

7. The dedicated repair tool managing system (100) according to claim 1, wherein, said problem collecting device (1) provides a human machine interface (12) through which the user inputs the description of the repair problem that needs to be addressed by way of options.

8. The dedicated repair tool managing system (100) according to claim 7, wherein, said options are selected from brands, types, parts, and malfunction types of the object that needs to be repaired.

9. The dedicated repair tool managing system (100) according to any of claim 1 to 8, further comprising said tool cabinet (8), said data switching device (3) being communicatively connected with said tool cabinet.

10. The dedicated repair tool managing system (100) according to claim 9, wherein, all of the problem collecting device (1), the dedicated tool selecting device (2), and the data switching device (3) are integrated in said tool cabinet (8).
